(19) Europäisches Patentamt
European Patent Office
Office européen des brevets

(11) **EP 0 913 637 B1**

(12) **EUROPEAN PATENT SPECIFICATION**

(45) Date of publication and mention
of the grant of the patent:
**19.01.2005 Bulletin 2005/03**

(51) Int Cl.⁷: **F23G 5/16**, F23G 7/06

(21) Application number: **99101311.1**

(22) Date of filing: **15.10.1990**

(54) **Fume burning system and method utilising reburn unit choking means**

Anlage und Verfahren zur Rauchverbrennung unter Verwendung einer Nachverbrennungseinheit mit Rauchgasklappe

Dispositif et procédé de combustion des fumées utilisant une chambre de postcombustion équipée d'un dispositif étrangleur

(84) Designated Contracting States:
**AT BE CH DE DK ES FR GB GR IT LI LU NL SE**

(43) Date of publication of application:
**06.05.1999 Bulletin 1999/18**

(62) Document number(s) of the earlier application(s) in accordance with Art. 76 EPC:
**90311260.5 / 0 482 251**

(73) Proprietor: **Basic, John N. Sr.**
**Marco Island, Florida 34145 (US)**

(72) Inventor: **Basic, John N. Sr.**
**Marco Island, Florida 34145 (US)**

(74) Representative: **Goodenough, Nigel et al**
**A.A. Thornton & Co.**
**235 High Holborn**
**London WC1V 7LE (GB)**

(56) References cited:
**FR-A- 2 626 655**      **GB-A- 906 993**
**US-A- 3 190 244**      **US-A- 4 285 282**
**US-A- 4 635 569**

EP 0 913 637 B1

## Description

This invention relates to a fume burning system and method, and in the preferred embodiment provides a fume burning system and method for improving the environmental quality of gaseous fluid emanating from an incinerator installation.

The prior art documents GB 906,993 and US 4,285,282 each disclose a fume burning system and method according to the preamble of the appended claims.

A first aspect of the invention provides a fume burning system according to the appended independent claim 1. Further novel and advantageous features are recited in the dependent claims 2 to 3. A second aspect of the invention provides a method of burning fumes according to appended independent claim 4. Further novel and advantageous method steps are recited in appended claims 5 to 7.

The fume burning system in the preferred embodiment of the invention includes an excitor placed within, surrounded by, and coupled to the reburn unit of an incinerator. The excitor, as a minimal purpose, in effect reduces the cross-sectional area thorough which the oxygen-containing gas must travel to reach the combustible hydrocarbons. Furthermore, it provides a reflective surface which will permit the heat either entering or generating within the reburn unit to reach the gaseous molecules to further encourage complete combustion. Within the reburn unit, the majority of the length of the excitor, in passing from the reburn's inlet to the reburn's outlet, should remain out of contact with the wall of the reburn unit. The excitor has the purpose of reducing the cross-sectional area on planes transverse to the path passing from the inlet opening to the outlet opening of the reburn unit.

The excitor, in this configuration, may serve to introduce the oxygen-containing gas into the reburn unit. It does so with nozzles, in fluid communication with the oxygenating mechanism and having an arrangement on the surface of the excitor. The nozzles introduce the air into the space between the inner surface of the reburn unit and the excitor and does so at a nonperpendicular angle to the direction of the path from the inlet to the outlet of the excitor. By thus avoiding the "T" configuration, the air entering the reburn unit through the nozzles will aid the turbulence of the gas without retarding or blocking its progress.

However, the excitor need not introduce the air or other oxygen-containing gas into the reburn unit to have an important and useful function. It may remain passively within the reburn unit to reflect the heat generated or introduced there. This will maintain the gases at an elevated temperature in which they will undergo their efficient and thorough combustion. To accomplish this, the surface of the excitor facing the interior of the reburn should have a composition of a heat and corrosion resistant material. This precludes its destruction at the temperatures and in the gaseous environments at which the reburn unit operates.

Stated alternately, the excitor should not absorb and pass the heat from the reburn unit into its interior. Rather, it should have a relatively low thermal conductivity to effectuate the reflection of the heat from its surface back into the gases undergoing combustion. As a convenient limit, the surface of the excitor facing the interior of the reburn should have a composition of a material with a thermal conductivity constant k less than about 8.7 w/mk

$$\left( \frac{60 \text{ Btu, in.}}{\text{hr. ft.}^2 \text{ °F}} \right)$$

where k is defined by $k = \frac{ql}{AT}$ where q is the heat flow in watts (Btu/Hr). through a surface of thickness 1 in metres (inches), area A in square metres (square feet), and temperature T in degrees calcius (degree F).

Whether with or without twin reburn sections or an excitor, a fume burner, when having a low input of gaseous fluid, may operate more efficiently when it permits a lower throughput of gases. To accomplish this objective, the fume burner includes a choking device coupled to its outlet opening to selectively reduce the cross-sectional area of this outlet opening. This will retain the gases within the reburn unit for a sufficient period of time to accomplish full combustion even though it has a minimal input. This may also find use upon the initial commencement of operation of the unit after it has cooled down and before introducing refuse. The unit can then reach operating temperature where it avoids environmental pollution. Reversing the damping effect and permitting the return unit's outlet opening to revert to its full size then allows the system's normal operation.

Rather than merely operating as fume burners, the components given above may form part of an integrated incinerator system. In this instance, in addition to the reburn unit with whatever improvements of those given above it may incorporate, the incinerator system will also include a main combustion chamber having an inlet for the introduction of solid bulk refuse. An outlet opening from the main chamber permits the egress of the gaseous products of combustion from there. The outlet opening from the main combustion chamber then couples to and displays fluid communication with the inlet opening of the reburn unit.

A method of burning fumes utilizing twin reburn tunnels involves passing the fumes from an output of a source directly into the inlet openings of first and second reburn sections. To maintain a desired temperature, the process will generally require burning a fuel in these two reburn sections. In order to promote the combustion of the gases, an oxygen-containing gas must be introduced into the reburn sections. Lastly, the gaseous combustion products within the reburn sections pass out through outlet openings.

To effectuate combustion with an excitor does not necessitate, of course, twin reburn sections. Rather, the fumes emanating from the output of a source pass into the inlet opening of a reburn unit. While there, they pass around an excitor placed within, surrounded by, and coupled to the reburn unit. The majority of the length of the excitor, passing from the reburn's inlet to its outlet, remains out of contact with the wall of the reburn unit.

To maintain the proper temperature, typically a fuel undergoes burning within the reburn unit. Then, as before, an oxygen-containing gas must enter the reburn unit to achieve combustion of the hydrocarbons. The oxygen-containing gas enters the space between the inner surface of the reburn and the excitor at a nonperpendicular angle relative to the direction of the flow of the gas in that space. Finally, the gaseous combustion products pass out of the reburn unit.

As an alternate aspect, the burning of fumes proceeds in a reburn unit as generally indicated above. The combustion of fuel in that unit maintains the desired temperature. Introducing the oxygen-containing gas permits the combustion of the fumes as required. According to the invention, the area of the outlet opening through which the gaseous combustion products pass out of the reburn unit may be selectively reduced in order to maintain the temperature in the unit at the desired level with the addition of minimal or no auxiliary fuel.

The burning of refuse according to these developments delineated above requires, in addition to the procedures discussed above for fume burning, the placing of refuse through an inlet opening into a main incinerator chamber. There, the bulk refuse burns to produce gaseous combustion products. These combustion products pass out of the main combustion chamber through an outlet opening and directly into an inlet opening of the reburn unit.

The invention will be better understood from the following description of a preferred embodiment of incinerator installation which incorporates an embodiment of fume burning system in accordance with the present invention, reference being had to the accompanying drawings in which:

Figure 1 is a perspective view of an incinerator system installation;
Figure 2 is a top plan view of a reburn unit having two separate reburning tunnels with each tunnel having two separate reburn stages;
FIGURE 3 provides a side elevational view of the reburn unit shown in FIGURE 2 and also shows further stages for processing the exaust gases.
FIGURE 4 gives a cross-sectional view of the twin reburn tunnels of FIGURE 3 along the line 4-4.
FIGURE 5 provides a close-up view, partially in section, of the damper that can serve to close off either or even both of the twin reburn tunnels of Figures 1 to 4.
FIGURE 6 shows the outlet openings of the twin reburn tunnels and the choke dampers which can partially close each of the outlet openings.
FIGURE 7 illustrates a damper that can serve to close off the inlet opening to either the twin reburn tunnels or partially block the outlet openings.
FIGURE 8 gives a cross-sectional view of a reburn tunnel having an excitor inside where air enters through both the reburn unit's wall and the excitor's wall.
FIGURE 9 provides a side cross-sectional view of a portion of a reburn tunnel having an excitor inside in which air enters the reburn tunnel through nozzles placed only on the excitor.
FIGURE 10 gives a cross-sectional view along the line 10-10 of the reburn tunnel shown in FIGURE 9.
FIGURES 11 to 15 provide diagramatic cross-sectional views of reburn tunnels with excitors showing, in particular, different techniques for increasing the cross-sectional areas of the reburn tunnels in going from the inlet opening to the outlet opening.
FIGURE 16 gives an isometric view, partially in section, of an incinerator main chamber having a grate in the vicinity of the inlet opening to the chamber but located above the chamber's floor.
FIGURE 17 displays an end view, in cross section, of the incinerator chamber of FIGURE 16.
FIGURE 18 provides a side elevational view of a scoop mechanism for removing ashes from the output pit of an incinerator system.
FIGURE 19 gives a side elevational view of an ash scoop used in the mechanism of FIGURE 18.
FIGURE 20 displays a top plan of the scoop of FIGURE 19.
FIGURE 21 gives an end elevational view along the line 21-21 of the track guide of the scoop of FIGURE 20.
FIGURE 22 illustrates a side elevational view of yet a further alternate ash removal mechanism.
FIGURE 23 provides an enlarged view of the chute mechanism shown in FIGURE 22.
FIGURE 24 gives a side elevational view of an alternate ash removal scoop for use in the mechanisms shown in Figures 18, 22, and 23.

**DETAILED DESCRIPTION**

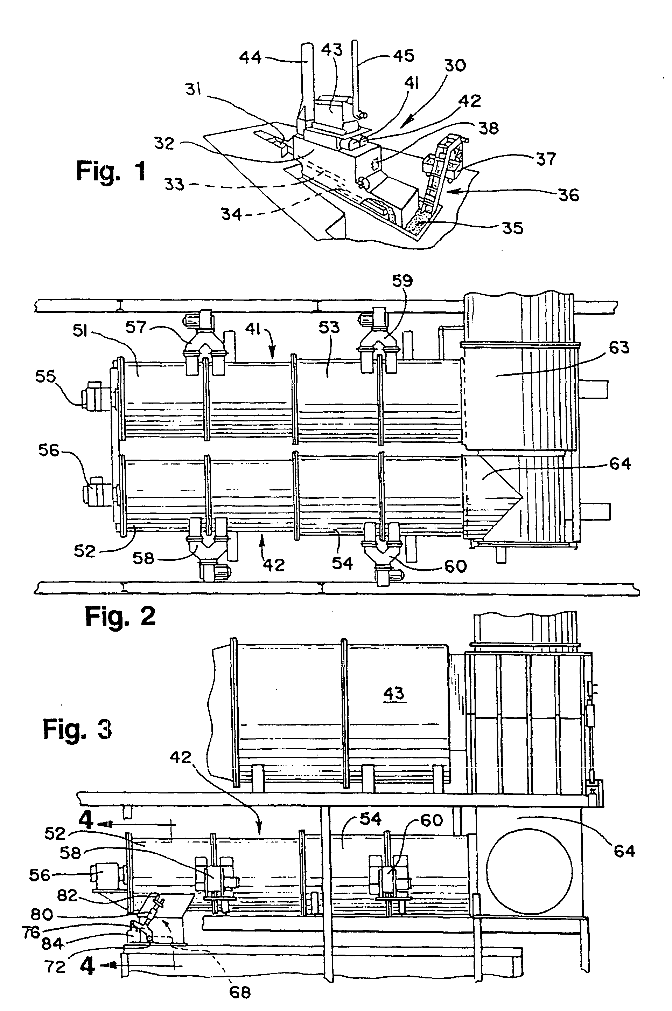

FIGURE 1 shows an incinerator system generally at 30. Bulk refuse or hydrocarbon-containing liquids enters the incinerator 30 through the loader 31 and enters the main chamber 32. During most of its stay in the incinerator 30, solid refuse remains upon the pulsating hearth floors 33 and 34. Upon the completion of combustion, the remaining ash falls into the pit 35 where the removal mechanism designated generally at 36 lifts it and places it in the truck 37. The door 38 permits access to the interior of the main chamber 32 for the usual maintenance.

The gases produced by the combustion within the main chamber pass through the dual reburn tunnels 41 and 42 and through the further treating, recirculation, and heat removal stages 43. They eventually leave through the stack 44. Heat recovered from the incinerator system 30 may pass into the pipe 45.

In FIGURES 2 and 3, the reburn tunnels 41 and 42 include the respective first reburn stages 51 and 52 and respective second reburn stages 53 and 54. The burners 55 and 56 at the beginning of the first stages 51 and 52 maintain the temperatures in the tunnels 41 and 42 at the desired levels for proper operation. They also bring the reburn temperatures up to the proper levels at the each commencement of operation. In fact, environmental regulations often require that the incinerator achieve its operating temperatures prior to the introduction of the first amount of refuse whatsoever after a shutdown. The burners 55 and 56 assist in this task.

The blowers 57 and 58 provide air to the first stages 51 and 52 for combustion and the blowers 59 and 60 perform the same function for the second stages 53 and 54. The gases from the second stages 53 and 54 pass through the outlets 63 and 64.

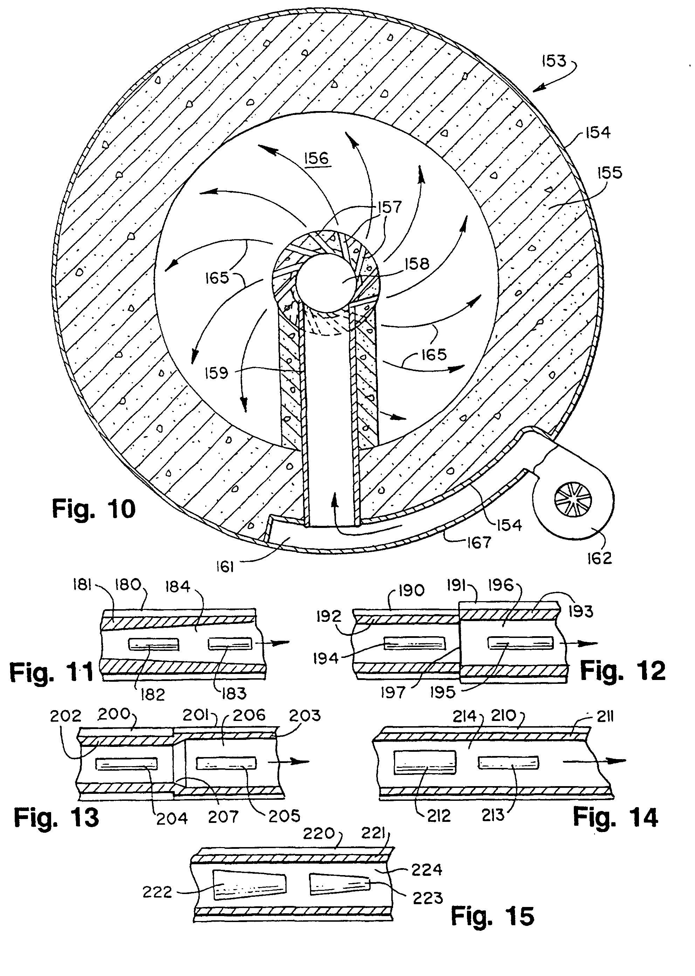

As observed, the second reburn stages 53 and 54 have greater cross-sectional areas than the first reburn stages 51 and 52 of the tunnels 41 and 42, respectively. This allows the second reburn stages 53 and 54 to accommodate the greater volumes of gases resulting from the introduction of air and from the combustion of volitalized hydrocarbons within the tunnels 41 and 42. This represents one method of increasing the volume of the reburn tunnels from their inlets to the outlets. Other techniques accomplishing the same objective receive discussion below with reference to Figures 11 to 15.

After leaving the second stages 53 and 54, the gases then pass to the subsequent treating section 43 and mentioned above.

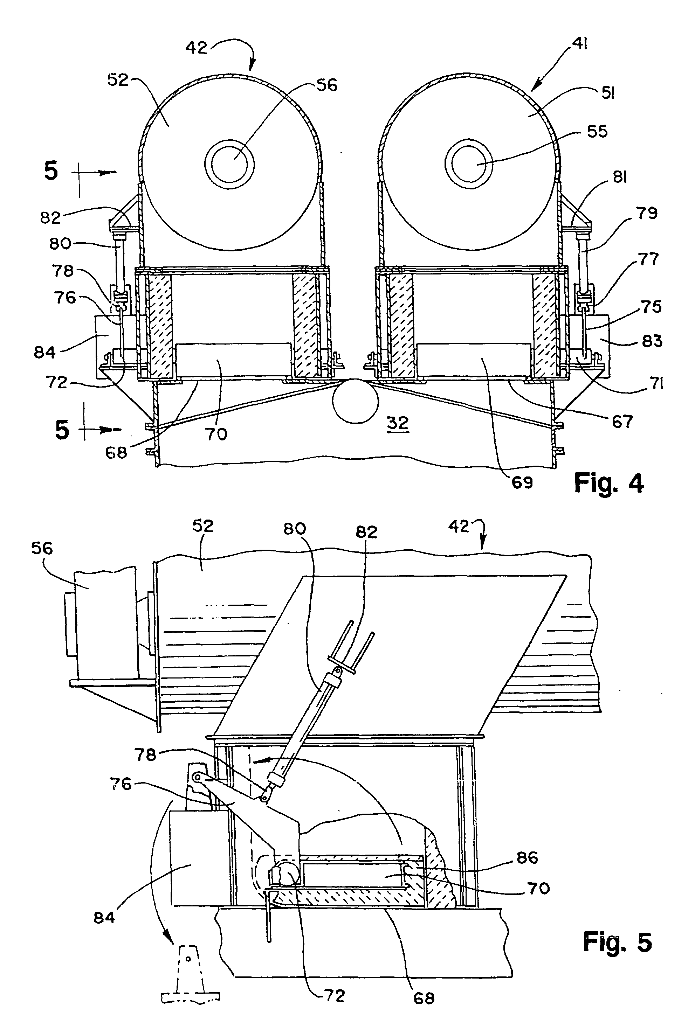

As seen in Figures 4 and 5, the gases from the main chamber 32 pass through the outlet openings 67 and 68 which also form the inlet openings to the reburn units 41 and 42, respectively. The dampers 69 and 70, when in the positions shown in FIGURES 3 to 5, cover the opening 67 and 68, respectively, and close them off. In operation, of course, at least one of the dampers 69 and 70 will remain open. When the main chamber 32 has sufficient combustible material inside, both will open and allow the gases to pass through to the reburn tunnels 41 and 42.

To accomplish their motion, the dampers 69 and 70 include the axial extensions 71 and 72. The lever arms 75 and 76 then connect ridgedly to the extensions 71 and 72. The rods 77 and 78 connect the lever arms 75 and 76 to the pistons 79 and 80 which attach ridgedly at their other ends to the brackets 81 and 82. The extension of the pistons 79 and 80 in Figures 3 to 5, especially the last, will induce the rotation of the lever arm 76 and its counterpart not shown about the center of the axis 72 to result in the opening of the dampers 69 and 70.

The counterweights 83 and 84 rotationally coupled to the other ends of the lever arms 75 and 76. They counterbalance the weight of the dampers 69 and 70 and facilitate their controlled motion.

A significant part of the weight of the dampers 69 and 70 results from their having a covering of the refractory 86 as shown in FIGURE 5. This, of course, provides protection against the high temperatures and corrosiveness of the gases passing around them.

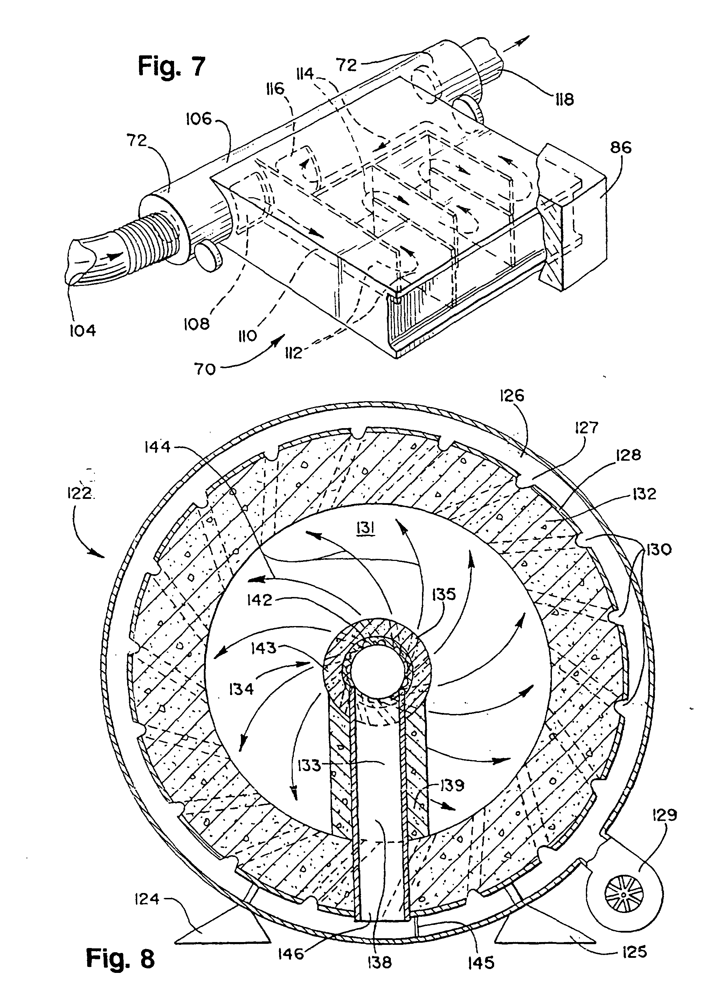

To help further protect the damper 69 and 70, they include air channels as discussed below with reference to FIGURE 7. The passage of air through the dampers 69 and 70 keeps them at a low enough temperature to prevent their destruction.

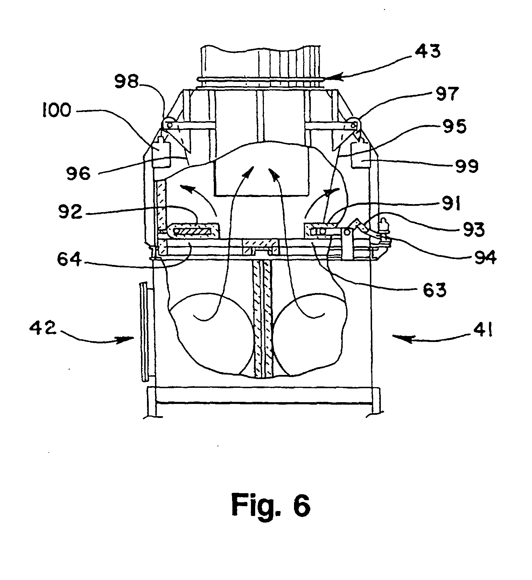

Similarly, the dampers 91 and 92 cover the outlet opening 63 and 64 of the reburn tunnels 41 and 42, respectively. As shown in FIGURE 6, however, the dampers 91 and 92, even when in the closed position as shown there, only cover up to about a maximum of about 60 percent of the outlet opening 63 and 64. When closed, they retain the gases within the reburn tunnels 41 and 42 for a longer time to assure their complete combustion. Typically such retention becomes desirable when the tunnels 41 and 42, and often, the main chamber 32, operate upon substantially less than the maximum amount of refuse or combustion gases than the system can handle.

The dampers 91 and 92 operate independently of each other depending upon the conditions in the respective reburn tunnels 41 and 42. They may, for example, submit to the control of temperature sensors placed within their respective tunnels. A lowering temperature may indicate the need to close the appropriate damper to retain the heat within the respective tunnel. Alternately, when the incinerator system produces steam, the damper control may measure the steam pressure produced by the system. A declining steam pressure may indicate a smaller quantity of heat within the system. This would provide an indication that either or both of the dampers 91 and 92 should close at least to some extent.

The dampers 91 and 92 in FIGURE 6 not only have the totally open or totally closed positions. They may also occupy intermediary locations to effectively block the outputs 63 and 64 by an amount less than the maximum closure that the dampers can achieve.

The movement of the damper 91 appears in FIGURE 6 under the action of the lever arm 93 connected to the piston 94 which effectuates the desired movement between opening and closing. The cable 95 attaches to the damper 91, passes over the pully 97 and connects to the weight 99 to counterbalance the weight of the damper 91. Only the cable 96, the pully 98, and the weight 100 appear in FIGURE 6 for the tunnel 42.

The choke dampers 91 and 92 serve to retain the gas within the reburn tunnels 41 and 42 for a greater period of time. In other words, it slows down the passage of the gas through these chambers. To achieve the desired combustion, the gas speed should typically not exceed about 17 metres per second (55 feet per second). To assure proper combustion, the gas should move no faster than about 14 metres per second (46 feet per second).

The dampers 91 and 92, as shown, take the form of rectangular blocks that pivot to open and close. Alternately, as square blocks, they may slide sideways into the position where they partially close the outlet openings 63 and 64. They reopen them by sliding sidewaysin the opposite direction. In fact, they may even slide through an opening in the exterior wall of the incinerator system for this purpose.

As a further alternate, the choke dampers at the ends of the reburn tunnels 41 and 42 may take the form of butterfly valves. This would give them either a round or rectangular configuration located within the outlets of the reburn units. They would then pivot about their centers to partially close or open the reburn's outlets. In the latter configuration, they would remain within the opening but present their edges of minimal area to avoid substantial interference with the passage of the gases.

FIGURE 7 shows a typical damper, for example, the closure 70 to the outlet opening 68 to the second reburn tunnel 42 seen in FIGURE 5. In FIGURE 7, a supply of air passes through the damper 70 to keep its temperature from rising to a point where it could suffer serious damage from the heated environment from which it operates. As seen from FIGURE 5, the ends of the axial extensions 72 sit on the outside of the tunnel 42.

The extensions 72 have hollow interiors which permits the passage of gas through them. To provide the cool gas, the flexible tube 104 connects to the nearer axial extension 74 to provide a source of cool gas. The cool gas travels through the interior of extension 72 into the axis 106 and out the opening 108 into the chamber 110. It then follows a path created by the dividers 112 and indicated by the arrows 114. Eventually it reaches the opening 116 in the axis 106 where it passes out through the other axial extension 72 and in it to the flexible tube 118.

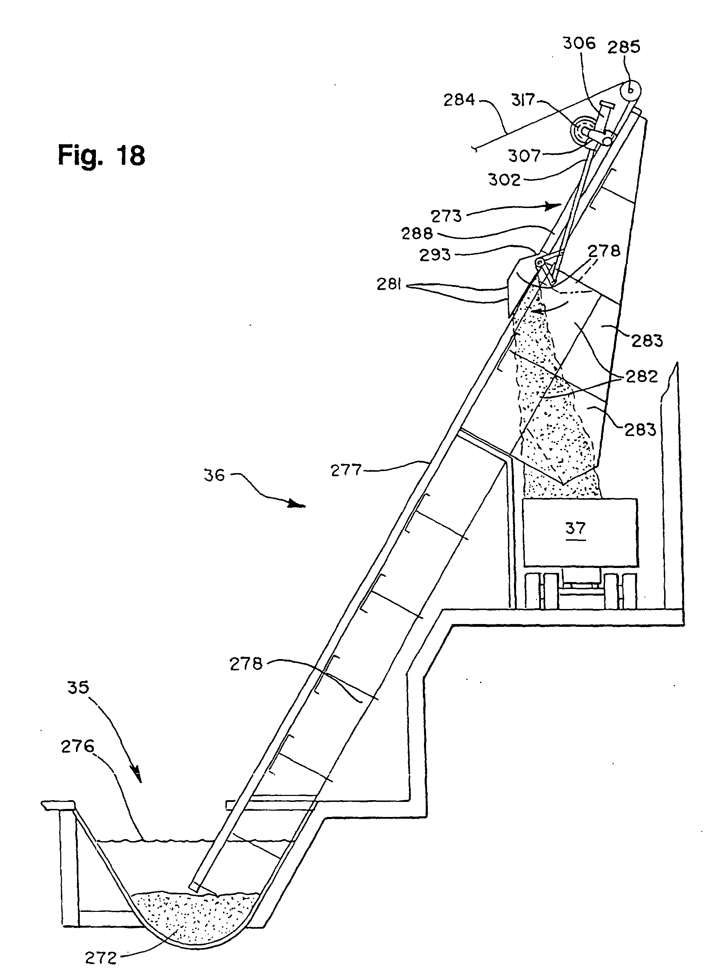

FIGURE 18 shows a reburn tunnel generally at 123 which may serve as either of the sections 51 or 53 of the reburn tunnel 41 or the sections 52 and 54 of the reburn tunnel 42. The tunnel 123 sits generally on the supports 124 and 125. The outer skin 126 surrounds the tunnel 123 and forms the plenum 127 in conjunction with the wall 128. The blower 129 places air in the plenum 127 under pressure. From there, the air may pass through the nozzles 130 which take it into the interior 131 of the reburn tunnel 123. The refractory 132 covers the interior wall 128 and the nozzles 130 to protect them from the heat and the corrosive environment of the interior 131 of the tunnel 123. Additionally, the air within the plenum 127 may pass through the support 133 and into the excitor 134 located in the tunnel's interior 131. From there it passes through the nozzles 135 and into the interior 131 where it helps support combustion.

The support 133 itself includes the inner wall 138 generally having a metalic composition. The refractory 139 surrounds the wall 138 to protect it from the tunnel's environment. Conveniently, the support 133 may have a rectangular cross section on planes parallel to the surface on which the tunnel sits. This will provide it with maximum cross-sectional area for the amount of the interference in the gas flow in the tunnel that it creates.

Similarly, the excitor 134 protects its inner metal wall 142 from corrosion and heat damage with the refractory covering 143. The nozzles 135 pass through the refractory 143.

As seen in FIGURE 8, air leaving the nozzles 135 does so with a tangential component of velocity. In other words, the nozzles 135 make an angle with the radii from the center of the excitor 134. Forty five degrees represents a desirable angle.

The gas emanating from the nozzles 135 with the tangential component of velocity follows the path generally shown by the arrows 144. This tangential movement of the air causes it to efficiently and effectively mix with the combustible gases contained in the tunnel's interior 131. Further, the nozzles 135 as well as the outer nozzles 130, will generally introduce the air with an axial component of velocity. In other words, the nozzles point downstream. The velocity of the gases leaving the nozzles may in fact make a 45 degree relative to the axial, or downstream, direction.

Additionally, the nozzles 135 may appear on the excitor 134 in rows in passing from the inlet to the outlet. To further assist the creation of the desired turbulence within the interior 131, the nozzles may have a staggered configuration from row to row to provide a more even air supply and turbulence.

The construction shown in FIGURE 8 may undergo modifications for different purposes. Thus, plugging the nozzles 130 will result in all of the air from the plenum 127 passing around the wall 128, through the support 133, into the excitor 134, and out of the nozzles 135 into the tunnel's interior 131. This appears to have a beneficial effect in creating the turbulence necessary for combustion.

Additionally, placing a barrier at the location 145 between the outer wall 126 and the plenum wall 128 will cause the air from the blower 129 to pass around substantially all of the plenum 127 before it reaches the inlet 146 to the support 133. This will have the effect of cooling the wall 128 with the air prior to its introduction into the interior 131. Furthermore, warming the air helps maintain the temperature inside the tunnel 123 at the necessary levels for combustion.

Alternately, the excitor 134 may have no nozzles on it whatsoever. In this eventuality, all the air entering the tunnel's interior 131 will pass through the nozzles 130 on the reburn unit 123 itself. Nonetheless, the excitor must still have some air passing through it from one support to the other. This provides a cooling effect to prevent the heat within the reburn tunnel 123 from destroying the excitor 134.

With or without nozzles, the excitor 134 serves additional purposes. The heat created within the interior 131 of the tunnel 123 itself helps to support the combustion of the gases inside. The heat near the middle of the interior 131 will pass into the refractory surface 143 of the excitor 134. From there it will radiate back into the interior 131 where it will help excite combustion.

To provide the reradiation of heat absorbed, the wall of the excitor 134 should permit very little of the heat to pass through. Thus, it should have a low thermal conductivity constant k, generally less than about 8.7 w/ mk (60 $\frac{Btu.in}{hr.ft^2 \circ F}$). Preferably, the conductivity constant k, as defined above, will not exceed about 3.5 (24).

Furthermore, the air entering the interior 131 must create turbulence in order to accomplish combustion. The excitor 134 reduces the maximum dimension of the space in the interior of the tunnel 123. Thus, air entering the interior 131 has a much shorter distance to travel to reach the combustible gasses. Thus it can more effectively create the required turbulence for combustion because of the presence of the excitor 134.

Desirably, the space between the outer surface of the refractory 143 of the excitor 134 and the inner surface of the refractory 132 covering the outer wall 128 should remain constant all around the excitor 134. This permits the most efficient mixing and turbulence of the oxygen introduced into the tunnel's interior 131. In the case of a circular reburn tunnel as shown in FIGURE 8, this would result in the interior 131 assuming an annular configuration.

In the case of an incinerator system with a single reburn tunnel, a single excitor would obviously suffice. For a system having twin reburn tunnels as shown in FIGURES 1 to 6, either or both of the tunnels may include an excitor. The latter, of course, represents the most desired configuration.

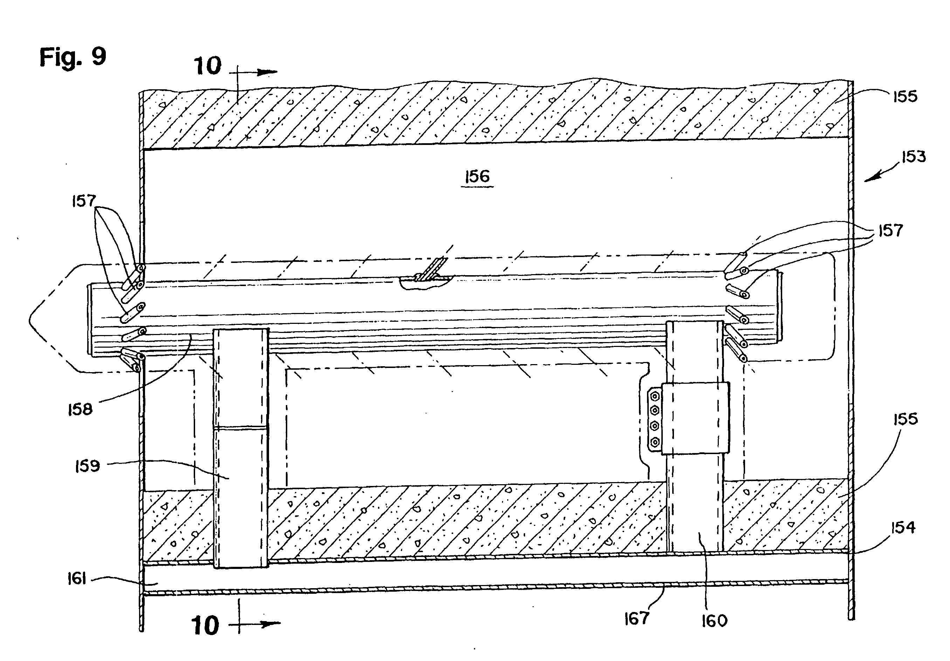

FIGURE 9 shows generally a portion of a reburn tunnel 153 which may, in fact, represent part of either of the reburn tunnels 41 or 42. The outer wall 154 includes the refractory covering 155 but no nozzles passing through it. Rather, all of the air entering the interior 156 of the tunnel 153 passes through the nozzles 157 on the excitor 158. That air, as before, enters the excitor 158 through its supports 159 and 160 and, eventually from the plenum 161. As seen in FIGURE 10, the blower 162 provides the air under pressure which eventually passes through the nozzles 157 into the interior 156.

As before, the nozzles 157 introduce the air with an axial component of velocity. Stated in other words, the air is introduced at least partially in the direction from the inlet of the reburn section 153 to the outlet, or in the direction from the first support 159 towards the second support 160. As in FIGURE 9, that angle generally amounts to about 45 degrees.

Furthermore, as shown in both FIGURES 9 and 10, the nozzles impart a tangential as well as a radial component of velocity to the air passing through them. Again, the nozzles will introduce the air at an angle of about 45 degrees relative to the radial direction. Thus, half of the non-axial velocity of the gases will move them outward and the other half moves them around the interior 156. The result appears in FIGURE 10 where the arrows 166 show the general vorticity to the direction of movement of the air.

The plenum 161 does not extend the entire circumference of the reburn tunnel 153. Rather, it only goes from the blower 162 to the support 159. The outer wall 167, along with the wall 154 attached to the refractory 155, creates the plenum 161. FIGURE 11 gives a diagram of a section of a reburn tunnel having the outer wall 180, the refractory 181 and the two excitor sections 182 and 183. The arrow indicates the direction of the gas movement as in FIGURES 12 to 15. The excitors 182 and 183 have the same, constant cross-sectional area. However, the cross-sectional area of the interior 184 increases in the direction of the gas movement because the refractory wall 181 slopes outward. This permits the reburn section to accommodate the increasing amounts of air introduced either through the wall 181 or the excitors 182 and 183. In FIGURE 11, the cross-sectional area of the interior 184 increases gradually because of the gradual slope of the refractory wall.

In FIGURE 12 appears another reburn section. It too has the outer wall 190 and 191, the refractory 192 and 193, and the excitor sections 194 and 195. As shown there, the interior 196 experiences a sharp, discontinuous increase at the juncture 197. This may, for example, represent the juncture between two separate reburn stages as shown in FIGURES 2 and 3 and discussed above.

FIGURE 13 again shows a reburn section having the outer wall 200 and 201, refractory sections 202 and 203 and excitor sections 204 and 205. There, the interior volume 206 increases gradually at the juncture 207 between the two sections. However, the sloping wall at the juncture 207 results in less adding another undesired turbulence than the very sharp discontinuity 197 shown in FIGURE 12.

Another reburn section appears in FIGURE 14 and includes the outer wall 210, the refractory 211, and the excitor sections 212 and 213. The smaller cross-sectional area of the excitor 213 as compared to the excitor 214 results in an increase in the cross-sectional area 214 of the interior as the gas travels from the excitor 212 to the excitor 213.

Finally, FIGURE 15 shows the reburn section with the walls 220 and 221 and the excitor sections 222 and 223. The conic shape of the excitor sections 222 and 223 results in a gradual increase of the volume of the gas as it passes across them in the interior 224.

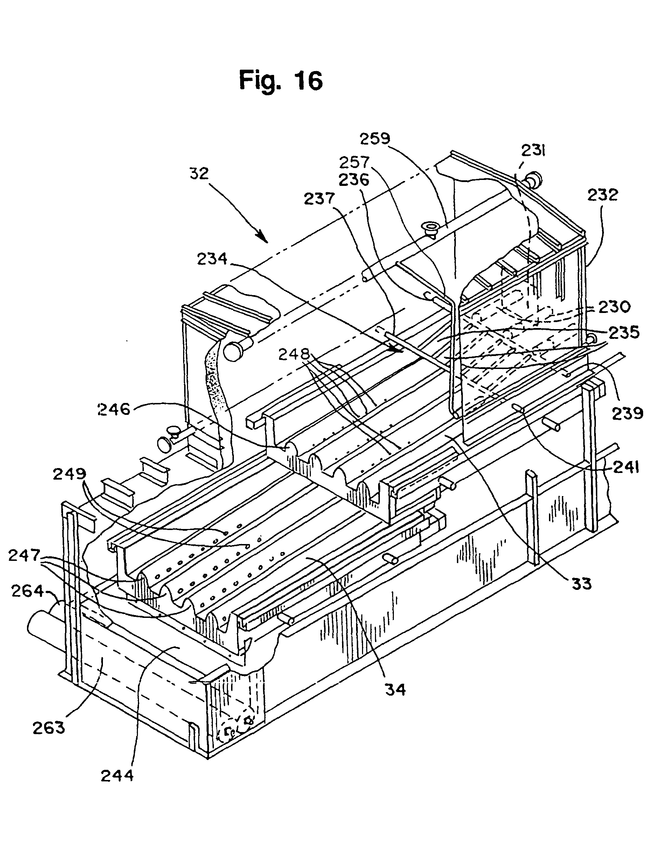

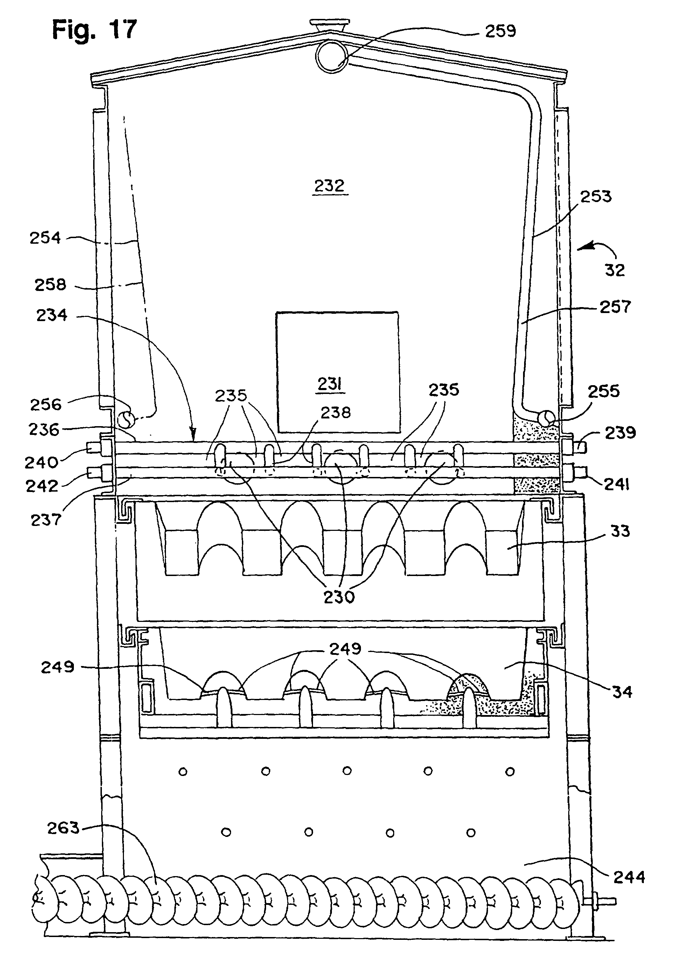

The initial combustion of the refuse, of course, takes place in the main chamber 32 as seen in Figures 16 and 17. The screw feeders 230 may assist in the introduction of particulate refuse such as rice hulls. More typically, bulk refuse enters through the opening 231 in the forewall 232. In any event, the bulk refuse entering the incinerator 32 sits upon the grate generally at 234. It will rest there briefly to permit combustion to commence.

If the refuse has a high moisture content, it may undergo drying while it rests upon the grate 234 to permit its more facile subsequent burning. If, upon entering, it immediately sat upon the hearth 33, it would experience greater difficulty in drying in order to undergo subsequent combustion.

Alternately, a very high calorific value (Btu content) material such as plastics may burn at very high temperatures. If this occurred on the floor 33, the uneven heating could cause slagging of the floor itself.

Thus, the refuse sits upon the grate 234, for a limited period of time. However, the majority of the fixed hydrocarbons within the material should remain unburned when the refuse slips through or off the grate 234 and onto the floor 33. The volatile hydrocarbon content may well have, by this time, already entered the gas stream.

As shown in Figures 16 and 17, the grate 234, to permit the refuse to fall to the floor 33, will include the holes 235 passing through it. The size of the openings of the holes 235 generally lies in the range of 305 to 457 mm (12 to 18 inches) This permits most types of refuse to fall through to the floor prior to the burning of the majority of the fixed hydrocarbons.

The grate 234, of course, exists in the heated and corrosive environment of the main chamber 32. Thus, it should generally have some mechanism for cooling it to prevent its destruction by heat or corrosion. To effectuate this result, the grate 234 includes the hollow longitudinal pipes 236 and 237 and the cross pipes 238. The pipe 236 has the couplings 239 and 240 while the pipe 237 includes the couplings 241 and 242. This permits the passage through it of a fluid which will effectuate the cooling of the grate 234. The fluid thus introduced may take the form of air, water, steam, or oil.

Additionally, the pipes 236 to 238 of the grate 234 will have a refractory coating to provide further heat protection. Lastly, a wear surface composed typically of face hardened refractory will help protect the grate 234 from abrasion due to the refuse placed upon it.

The floor 33 may assume a number of forms. A particular and advanced type of pulsed hearth floor appears in Basic's U. S. Patent 4,475,469 mentioned above. Other types of floors may work also, displaying various degrees of desirability.

Thus, for example, the floor 33 may simply be form of a stationary hearth. Some form of a ram or other pusher would then typically move the refuse along until it burned into ashes which would then fall into an appropriate collector. Often, however, the floor will experience some form of movement to assist the burning refuse in traveling from the inlet to the outlet of the main chamber 32.

The floor 33 may often constitute a hearth, whether moving or stationary. Experience indicates that the former represents the preferred technique. The pulsating hearth, whether in the configuration shown in Basic's patent or otherwise has proved most efficient. In Basic's patent, the hearth experiences arcuate movement, in pulses, in the direction from the inlet 231 toward the outlet. It moves more rapidly in the former direction than the latter in order to toss the refuse along almost in a snow-shovel type movement.

The hearth floor 33 shown in FIGURE 16 has a shape that has proved beneficial in the burning of many types of refuse. Here, the floor inclines from the inlet 232 to the outlet ash pit 244. This slight lean built into the upper floor 33 and the lower floor 34 assists the refuse in moving in response to any motion experienced by the floors.

Additionally, the floors 33 and 34 include the ridges 246 and 247, respectively, on their upper surfaces. This helps channel and shuffle the refuse sitting there to aid in its combustion. The jets 248 on the upper floor 33 and 249 on the lower floor 34 provide under-fire air to assist combustion to the burning refuse.

As shown in FIGURE 17, the nozzles 249, as do the nozzles 248 of the upper floor 33, the lower floor 34, incline downwards as they introduce the air into the main chamber 32. This downward angle on the nozzles 249 and 248 helps prevent the entrance of particles of refuse into them which could result in their clogging.

The amount of air introduced through the nozzles 248 and 249 may vary depending upon the conditions within the incinerator system in general in the main chamber 32 in particular. Thus, as discussed above, the system may contain insufficient refuse to operate at or near capacity. Introducing in this case less air through these jets, may assist the entire incinerator system to reach or remain at its proper operating temperature.

Instead of the hearth floors 33 and 34, the main chamber 32 could include a grate floor underneath the grate 234. The refuse would fall from the upper grate to the lower grate and then undergo its full combustion. This lower grate may then either remain stationary or experience some type of movement to transfer the burning refuse in the direction of the ash pit 244.

This may work in conjunction with utilization of the choke dampers 91 and 92. One method of accomplishing the reduction of the air in the main chamber would simply involve turning off the air introduced in the second pulsating hearth floor 34.

The main chamber 32 includes the membrane sidewalls 253 and 254 which appear diagramatically in FIGURES 16 AND 17. In these walls, the water passes through the lower inlet pipes 255 and 256. From there it passes through the tubules 257 and 258 of the membrane walls 253 and 254 to the header pipe 259. From there it may travel elsewhere to provide useful energy in the form of steam for electricity, heating, or other purposes.

As discussed above, the main chamber may not have sufficient refuse to support the heat throughout the incinerator system. In this eventuality, the amount of heat taken out through the header 259 may suffer a reduction in order to leave sufficient heat within the main chamber and reburn tunnels to maintain the temperatures required for clean and efficient burning.

The ash pit 244 of the main chamber 32 includes the screw feeders 263 and 264. These remove ashes from the pit 244. However, as with other ash removal systems such as the chain drag system, the moving components of the screw feeders 263 and 264 sit under the water and in the ash pit where any repair proves difficult. A significantly improved type of ash removal system appears in FIGURES 18 to 25.

The ash pit 35 appears at the bottom of FIGURE 18. Typically, it will contain water 271 and the ashes 272 at the bottom. The water 271, of course, provides a seal between the interior of the main combustion chamber and the room atmosphere.

Naturally, from time to time the ashes 272 must undergo removal from the pit 35. To accomplish this objective, the scoop mechanism shown generally at 273 descends along the track 277 until the scoop 278, in the configuration shown in solid lines in FIGURE 18, enters the water 271 and digs into the ash heap 272. It then reverts to its carrying configuration shown in dashed lines in FIGURE 18 while remaining at the bottom of the pit 272. This allows the scoop 278 to capture a portion of the ashes 272.

The scoop mechanism 273 then rises along the track 277. Desirably, it will stop shortly after lifting the scoop 278 itself out of the water 271. The water entrained with the ashes 272 will then have an opportunity to drain through the openings 281 in the bottom of the scoop 278. The back of the track 277 forms a trough 278 which will guide the dripping water back into the pit 35.

When the mechanism 273 has returned to its elevated position as shown in FIGURE 18, the scoop 278 moves from its holding configuration shown in dashed lines to its release configuration shown in solid lines. The ashes then fall from the scoop 278 through the opening 282 in the trough 278 and into the truck 37 or other container. The side guards 283 keep the ashes from splattering outside of the truck 37.

The scoop mechanism 273 moves upward and downward under the influence of the cable 284. At one end, the cable 284 attaches to a typical winch which winds up and releases the cable 284 depending upon the winch's controls. In turn, the cable 284 passes over the pully 285 and attaches to the scoop mechanism 273. When the winch unwinds the cable 284, the latter passes over the pulley 285 and allows the scoop mechanism 273 to descend into the pit 35. When the winch winds up the cable 284, it pulls on the scoop mechanism 273 dragging it out of the water and up the track 277.

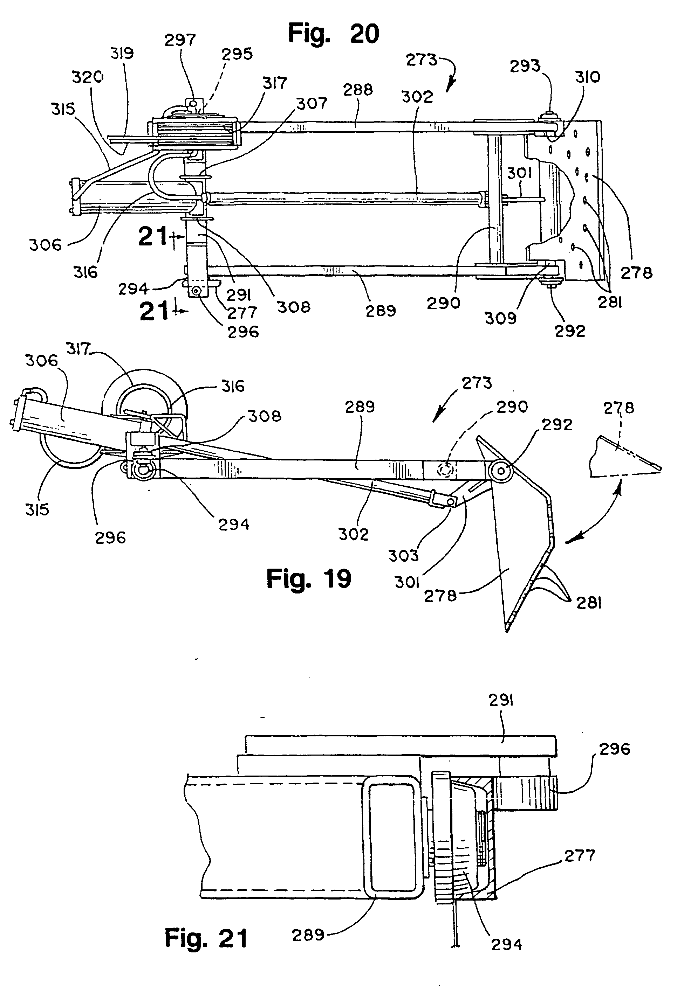

The scoop mechanism, or trolley, 273 appears in greater detail in FIGURES 19 and 20. The trolley 273 first consists of the rigid frame formed by the runner bars 288 and 289, and the front crossbar 290 and the rear crossbar 291 rigidly adhered to the runner bars 288 and 289. The front wheels 292 and 293 and the rear wheels 294 and 295 ride inside of the track 277 as shown in FIGURE 21. Further, the horizontal guide wheels 296 and 297 press against the tracks 277 from the outside of the rear wheels 294 and 295, respectively. This assures proper alignment of the trolley 273 on the track 277.

The arrangement of the guide wheels 296 and 297 has a further advantage in considering the use of the trolley 273 in removing ashes from the pit 35. Specifically, the rear wheels 294 and 295 riding inside of the track members 277 and the guide wheels 296 and 297 pressing against the side of the track members 277 largely orient the scoop mechanism 273 on the track 277. When the cable 284 allows the scoop 278 to descend into the pit 35, only the front end of the trolley 273 actually enters the water 271. The rear of the trolley 273, including the wheels 294 to 297, remain at all times outside of the water 271.

Thus, the wheels which must make intimate and proper contact with the track 277 to primarily orient the trolley 273 remain out of the water which could cause it to corrode or become impeded by debris within the water.

Keeping the rear of the trolley 273 out of the water has further advantages with regards to controlling the configuration of the scoop 278. The scoop 278 includes the ridgedly attached flange 301 to which the rod 302 pivotally connects at the juncture 303. The other end of the rod 302 connects to a piston contained within the cylinder 306. The piston 306 in turn pivotally connects to the flanges 307 and 308 on the rear crossbar 291.

When the pressure within the cylinder 306 forces its piston to move outward, it extends the bar 302 to the right in FIGURES 19 and 20. This in turn causes the flange 301 to move downward. As a consequence, the scoop 278 moves around its rotating couplings 309 and 310 to the side bars 288 and 289. This causes the scoop 278 to move from the position shown in solid in FIGURES 18 and 19 to that shown by the dashed lines.

Conversely, when the pressure within the cylinder retracts the piston, the bar 302 moves to the left of FIGURES 19 and 20 and pulls the connection 303 with the flange 301 in that same direction. This in turn causes the flange 301 and the scoop 278 to rotate in the clockwise direction from the position shown in phantom FIGURE 19 to that shown in solid lines. This moves the scoop from the releasing configuration to the holding configuration where it will retain ashes. This motion takes place, of course, with the scoop 278 in the pit 35 so that it may grab onto a portion of the ashes 272.

During the latter, or grabbing, type of motion, the scoop 278 may contact a solid object in the pit 35. This happens since the incinerator system 30 accepts bulk refuse without presorting. A common item that may find its way into the pit 35 is a muffler or other solid discard. Desirably, the cylinder 306 should not attempt to force the movement of the scoop 278 any further. Thus, in this intermediate configuration, the scoop 278 will remain in contact with the solid object.

As the trolley 273 then moves up the track 277, it will drag the solid object with it. At its top position, the scoop 278 will again move to its release position and drop the muffler or other solid item into the truck 37. The use of pneumatic controls for the cylinder 306 will provide it with this cushioning or flexibility to allow it to remove such solid objects without damage to itself or the track 277.

As further assistance, the controls may actually reduce the pressure within the cylinder 306 once the scoop 278 contacts the solid object within the pit 35. This provides additional assurance that the solid object will not damage any component of the ash removal system.

The fluid for controlling the cylinder 306 passes through the hoses 315 and 316 which in turn wrap around the reel 317. As the trolley 273 moves up and down the track 277, the reel 317 releases and recaptures the midportions 319 and 320 of the hoses to keep them out of the way of the trolley 273.

Again, with the trolley 273 in its lowest position where the scoop 278 enters the pit 35, the cylinder 306 and the reel 317 remain out of the water. They thus avoid the deleterious effects of the water, the ashes, and the chemicals contained in both of them. Furthermore, the winch operating the cable 284, as appears from FIGURE 18, will always remain out of the water.

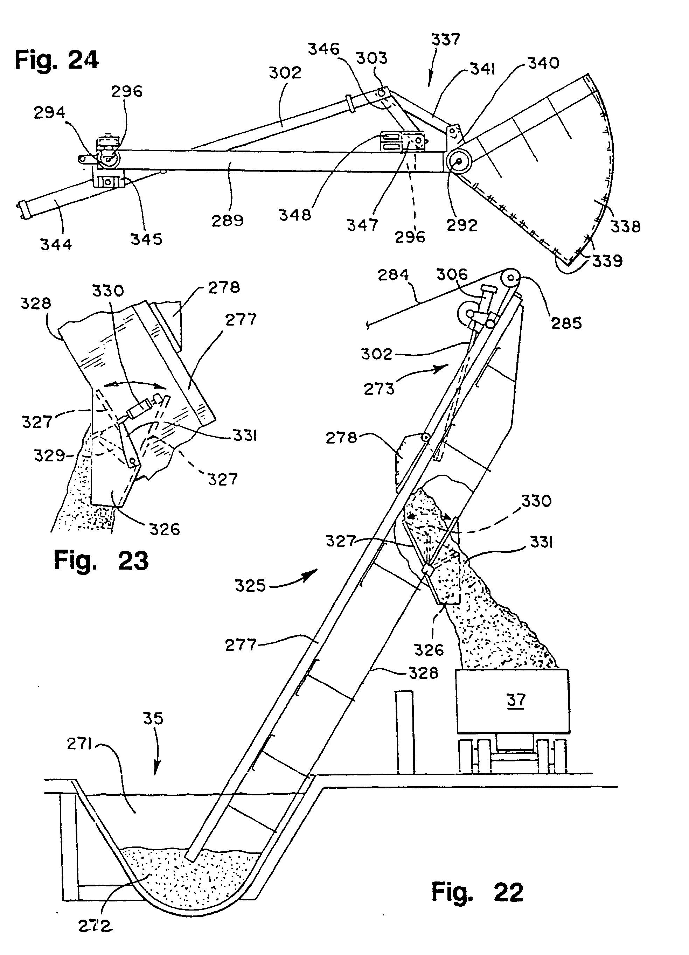

FIGURE 22 shows the track mechanism generally at 325, but with a slightly different chute mechanism for delivering the ashes into the truck 37. The track 277 and the trolley 273 remain virtually the same as before.

However, the track 325 includes the rotating chute guide 326 which assumes the configuration shown in FIGURE 22 with the trolley 273 near the top of the track. Then the scoop 278 moves from its retaining to its releasing configuration. When this occurs and the ashes drop from the scoop, the chute guide 326 directd the ashes to the truck 37. After the ashes have entered the truck 37, the chute guide 326 rotates in the counterclockwise direction shown in FIGURE 22 so that its shovel 327 forms a portion of the trough 328.

The mechanism for controlling the rotating chute guide 326 appears more clearly in FIGURE 23 which shows the opposite side of the track 325 from that seen in FIGURE 22. As seen there, the operation of the rotating track portion 327 of the chute 326 results from the influence of the cylinder 330. When the cylinder 330 forces out its piston, the latter connects to the lever arm 331 rigidly attached to the rotating track portion 327. In that instance, the lever arm 331 will take the position shown in phantom and the track portion 327 will connect with the remaining of the chute 328.

When the piston 330 contracts, it pulls the lever arm 331 to the right to the position shown in FIGURE 23 resulting in the track portion 327 rotating clockwise. This causes the debris from the scoop 278 to fall through to the truck 37.

An alternate type of scoop mechanism appearing generally at 337 in FIGURE 24. It utilizes the same trolly as in FIGURES 19 and 20. Thus, it includes the same runner bars 288 and 289 with the crossbars 290 and 291. It moves along the track in the same manner as described previously utilizing the wheels 292 to 297.

This trolley employs, instead of the scoop 278 shown in the prior figures, the bucket 338 which has the holes 339 for water to pass through. The bucket 338 has a rotational coupling at the juncture 292 and the flange 340 which controls its configuration. The flange 340 in turn connects to the lever arm 341 which attaches to the usual bar 302. In turn, the bar 302 connects to a piston within the hydraulic cylinder 339. The cylinder 339, in turn, has a pivotal coupling to the flange 340 which must be added to the trolley 273 as of FIGURES 19 and 20.

To assure the proper movement of the bar 302 and the lever arm 341, the bar 302, at its juncture 303, also couples to the lever arm 346. The latter pivotally couples to the flange 347 attached by the braces 348 to the crossbar 290. The lever arm 346 thus assures the correct rotational motion of the juncture 303 and, concomitantly, the scooping movement of the bucket 338.

In operation, the extension of the rod 302 by the cylinder 344 will cause the bucket 338 to rotate in the clockwise direction in FIGURE 24. In this configuration, it will not hold debris. The trolley 333 then descends into the water with the bucket 338 travelling between the track 277 and the trough 328.

When the bucket 338 reaches the bottom of the pit 35, the cylinder 344 retracts the bar 302. Under the influence of the lever arms 341 and 346, this causes the bucket 338 to rotate in the counterclockwise direction in FIGURE 24. In effect, this induces the bucket, when in the pit, to move forward to scoop up ashes.

The trolley 337 then moves up the track 277. Then the cylinder extends the rod 302, and the bucket rotates in the clockwise direction of FIGURE 24 and dumps its contents.

The use of the bucket 338 would appear warranted in situations producing heavy ash or debris such as gravel undergoing decontamination in the incinerator system. The stronger, hydraulic cylinder 344 would give the bucket 338 additional force to dig out the contents of the pit 35.

In comparison, the back hoe scoop 278 shown in FIGURES 19 and 20 would appear more desirable for the usual municipal waste. There the scoop 278 may have to stop its motion in the forward direction when contacting a solid object 1"like a muffler or a bicycle. The pneumatic cylinder 306 has a greater cushioning to permit the scoop 278 to stop its motion when it makes the contact and yet not destroy either the cylinder 306 or the scoop 278. Furthermore, the valving for the cylinder 306 may reduce the pressure should the scoop 278 contact such a solid object. This helps avoid destruction in many of the components of the trolley 273 or the track 277.

Switching between the scoop 278 and the bucket 338 requires only minimal effort. Naturally, to carry the latter, the trolley should include the brackets 345 and 347. Otherwise, switching between the two mechanisms simply involves exchanging the cylinders 306 and 344 and the scoop 278 with the bucket 338. Additionally, the bucket 338 requires the lever arms 341 and 346 while the scoop 278 does not use any such lever arm. Thus, the ash removal system may employ either type of scoop depending upon the refuse placed into the incinerator.

## Claims

1. A fume burning system for improving the environmental quality of a gaseous fluid emanating from the output (67, 68) of a source and containing combustible hydrocarbons comprising a reburn unit (41, 42, 123) with:

   (1) an inlet opening, (67, 68) coupled to and in fluid communication with said output (67, 68);
   (2) an outlet opening (62, 63) for the egress of the gaseous products of combustion from said reburn unit (41, 42, 123);
   (3) burner means (55, 56), coupled to said reburn unit (41, 42, 123), for burning a fuel in said reburn unit;
   (4) oxygenating means (127, 129, 130, 133, 134, 135), coupled to said rebum unit, for introducing an oxygen-containing gas into said reburn unit, and
   (5) choking means (91, 92), coupled to said outlet opening, for selectively reducing the cross-sectional area of said outlet opening,

   **characterized by**:

   (A) sensing means, coupled to said reburn unit, for determining a condition within said reburn unit; and
   (B) choking control means, coupled to said sensing means and said choking means, for, in response to the condition determined by said sensing means, controlling the amount of the cross-sectional area of said outlet opening reduced by said choking means.

2. The fume burning system according to Claim 1 further **characterized by**

   (A) said reburn unit (41, 42, 123) including first and second separate reburn sections (41, 42);
   (B) said outlet having first and second outlet ports (67, 68) each for permitting the egress of the gaseous products of combustion from said main combustion chamber;
   (C) said inlet opening (67, 68) having first and second inlet ports, coupled to and in fluid communication with said outlet, said first and second inlet ports opening into said first and second reburn sections, respectively;
   (D) said outlet opening including third and fourth outlet ports (62, 63) from said first and second reburn sections, respectively;
   (E) said burner means including first and second burner sections (55, 56), coupled to said first and second rebum sections, respectively, for burning a fuel in said first and second reburn sections, respectively, and
   (F) said oxygenating means including first and second oxygenating sections (127, 129, 130, 133, 134, 135), coupled to said first and second reburn sections, respectively, for introducing an oxygen-containing gas into said first and second reburn sections, respectively.

3. A combustion system comprising a fume burning system according to Claim 1 or 2, wherein the combustion system comprises a main combustion chamber (32) having the features of:

   (a) an inlet (231) for the introduction of solid bulk refuse; and
   (b) an outlet (67, 68) coupled to said first inlet opening of said reburn unit for the egress of the gaseous products of combustion from said main chamber.

4. A method of burning fumes emanating from the output of a source comprising:

   (A) passing said fumes from said output directly into an inlet opening (67, 68) of a reburn unit (41, 42, 123);
   (B) burning a fuel in said reburn unit;
   (C) introducing an amount of an oxygen-containing gas into said reburn unit;
   (D) passing the gaseous combustion products out of said rebum unit through an outlet opening (62, 63); and
   (E) selectively reducing the cross-sectional area of said outlet opening; **characterized by**:

(A) determining a condition within said reburn unit; and
(B) in response to the condition determined within said reburn unit, controlling the amount of the cross-sectional area of said outlet opening reduced by said choking means.

5. The method of Claim 4 further **characterized by**:

(A) placing bulk refuse through a first inlet (231) into a main incinerator chamber (32);
(B) burning said bulk refuse to produce gaseous combustion products; and
(C) passing the gaseous combustion products out of said main combustion chamber through said outlet (67, 68) and directly into said inlet opening (67, 68) of said reburn unit.

6. The method of Claim 5 further **characterized by**:

(A) said reburn unit comprising first and second sections (41, 42) and the passing of the gaseous combustion products out of said main combustion chamber through said outlet being directly into (a) a second inlet opening (67) of said first reburn section and (b) a third inlet opening (68) of said second reburn section;
(B) burning a fuel in said first and second reburn sections;
(C) introducing an amount of an oxygen-containing gas into said first and second reburn sections; and
(D) passing the gaseous combustion products out of said first and second reburn sections through first and second outlet openings (62, 63) respectively.

7. The method of Claim 4 further **characterized by**:

(A) passing the gaseous combustion products out of said main combustion chamber through said outlet and directly into (a) a first inlet opening (67) of a first reburn section (41) of said reburn unit and (b) a second inlet opening (68) of a second reburn section (42) of said reburn unit;
(B) burning said fuel in said first and second reburn sections;
(C) introducing an amount of said oxygen-containing gas into said first and second reburn sections; and
(D) passing the gaseous combustion products out of said first and second reburn sections through first and second outlet openings (62, 63) of said reburn unit, respectively.

**Patentansprüche**

1. Rauchgasverbrennungssystem zum Verbessern der ökologischen Qualität eines gasförmigen Fluids, das über den Ausgang (67, 68) einer Quelle austritt und brennbare Kohlenwasserstoffe enthält, und das eine Reburn-Einheit (41, 42, 123) mit:

1. einer Einlassöffnung (67, 68), die mit dem Ausgang (67, 68) gekoppelt ist und in Fluidverbindung damit steht;

2. einer Auslassöffnung (62, 63) zum Austreten der gasförmigen Verbrennungsprodukte aus der Reburn-Einheit (41, 42, 123);

3. einer Brenneinrichtung (55, 56), die mit der Reburn-Einheit (41, 42, 123) gekoppelt ist, um einen Brennstoff in der Reburn-Einheit zu verbrennen;

4. einer Sauerstoffanreicherungseinrichtung (127, 129, 130, 133, 134, 135), die mit der Reburn-Einheit gekoppelt ist, um ein sauerstoffhaltiges Gas in die Reburn-Einheit einzuleiten, und

5. einer Drosseleinrichtung (91, 92), die mit der Auslassöffnung gekoppelt ist, um selektiv die Querschnittsfläche der Auslassöffnung zu verringern, umfasst,

**gekennzeichnet durch**:

A) eine Erfassungseinrichtung, die mit der Reburn-Einheit gekoppelt ist, um einen Zustand in der Reburn-Einheit zu bestimmen; und
B) eine Drosselsteuereinrichtung, die mit der Erfassungseinrichtung und der Drosseleinrichtung gekoppelt ist, um in Reaktion auf den **durch** die Erfassungseinrichtung bestimmten Zustand die Größe der **durch** die Drosseleinrichtung verringerten Querschnittsfläche der Auslassöffnung zu steuern.

2. Rauchgasverbrennungssystem nach Anspruch 1, des Weiteren **dadurch gekennzeichnet, dass**:

A) die Reburn-Einheit (41, 42, 123) einen ersten und einen zweiten separaten Reburn-Abschnitt (41, 42) enthält;

B) der Auslass einen ersten und einen zweiten Auslassanschluss (67, 68) aufweist, die jeweils das Austreten der gasförmigen Verbrennungsprodukte aus der Haupt-Verbrennungskammer ermöglichen;

C) die Einlassöffnung (67, 68) einen ersten und einen zweiten Einlassanschluss aufweist, die mit dem Auslass gekoppelt sind und in Fluidverbindung damit stehen, wobei sich der erste und der zweite Einlassanschluss in den ersten bzw. den zweiten Reburn-Abschnitt öffnen;

D) die Auslassöffnung einen dritten und einen vierten Auslassanschluss (62, 63) von dem ersten bzw. dem zweiten Reburn-Abschnitt enthält;

E) die Brennereinrichtung einen ersten und einen zweiten Brennerabschnitt (55, 56) enthält, die mit dem ersten bzw. dem zweiten Reburn-Abschnitt gekoppelt sind, um einen Brennstoff in dem ersten bzw. dem zweiten Reburn-Abschnitt zu verbrennen, und

F) die Sauerstoffanreicherungseinrichtung erste und zweite Sauerstoffanreicherungsabschnitte (127, 129, 130, 133, 134, 135) enthält, die mit dem ersten bzw. dem zweiten Reburn-Abschnitt gekoppelt sind, um ein sauerstoffhaltiges Gas in den ersten bzw. den zweiten Reburn-Abschnitt einzuleiten.

3.   Verbrennungssystem, das ein Rauchgas-Verbrennungssystem nach Anspruch 1 oder 2 umfasst, wobei das Verbrennungssystem eine Haupt-Verbrennungskammer (32) umfasst, die die folgenden Merkmale aufweist:

a) einen Einlass (231) zum Einleiten von festem Abfall; und

b) einen Auslass (67, 68), der mit der ersten Einlassöffnung der Reburn-Einheit zum Austreten der gasförmigen Verbrennungsprodukte aus der Hauptkammer gekoppelt ist.

4.   Verfahren zum Verbrennen von Rauchgasen, die über den Ausgang einer Quelle austreten, das umfasst:

A) Leiten der Rauchgase von dem Ausgang direkt in eine Einlassöffnung (67, 68) einer Reburn-Einheit (41, 42, 123);

B) Verbrennen eines Brennstoffs in der Reburn-Einheit;

C) Einleiten einer Menge an sauerstoffhaltigem Gas in die Reburn-Einheit;

D) Leiten der gasförmigen Verbrennungsprodukte aus der Reburn-Einheit über eine Auslassöffnung (62, 63); und

E) selektives Reduzieren der Querschnittsfläche der Auslassöffnung;

**gekennzeichnet durch**:

A) Bestimmen eines Zustandes in der Reburn-Einheit; und

B) in Reaktion auf den in der Reburn-Einheit bestimmten Zustand Steuern der Größe der **durch** die Drosseleinrichtung verringerten Querschnittsfläche der Auslassöffnung.

5.   Verfahren nach Anspruch 4, des Weiteren **gekennzeichnet durch**:

A) Einbringen von Abfall über einen ersten Einlass (231) in einen Haupt-Feuerraum (32);

B) Verbrennen des Abfalls, um gasförmige Verbrennungsprodukte zu erzeugen; und

C) Leiten der gasförmigen Verbrennungsprodukte aus der Haupt-Verbrennungskammer über den Auslass (67, 68) direkt in die Einlassöffnung (67, 68) der Reburn-Einheit.

6.   Verfahren nach Anspruch 5, des Weiteren **dadurch gekennzeichnet, dass**:

A) die Reburn-Einheit einen ersten und einen zweiten Abschnitt (41, 42) umfasst und das Leiten der gasförmigen Verbrennungsprodukte aus der Haupt-Verbrennungskammer über den Auslass direkt in a) eine zweite Einlassöffnung (67) des ersten Reburn-Abschnitts und b) eine dritte Einlassöffnung (68) des zweiten Reburn-Abschnitts stattfindet;

B) Verbrennen eines Brennstoffs in dem ersten und dem zweiten Reburn-Abschnitt;

C) Einleiten einer Menge an sauerstoffhaltigem Gas in den ersten und den zweiten Reburn-Abschnitt; und

D) Leiten der gasförmigen Verbrennungsprodukte aus dem ersten und dem zweiten Reburn-Abschnitt über die erste bzw. die zweite Auslassöffnung (62, 63).

7.   Verfahren nach Anspruch 4, des Weiteren **gekennzeichnet durch**:

A) Leiten der gasförmigen Verbrennungsprodukte aus der Haupt-Verbrennungskammer über den Auslass direkt in a) eine erste Einlassöffnung (67) eines ersten Reburn-Abschnitts (41) der Reburn-Einheit und b) eine zweite Einlassöffnung (62) eines zweiten Reburn-Abschnitts (42) der Reburn-Einheit;

B) Verbrennen des Brennstoffs in dem ersten und dem zweiten Reburn-Abschnitt;

C) Einleiten einer Menge an sauerstoffhaltigem Gas in den ersten und den zweiten Reburn-Abschnitt; und

D) Leiten der gasförmigen Verbrennungsprodukte aus dem ersten und dem zweiten Reburn-Abschnitt über die erste bzw. die zweite Auslassöffnung (62, 63) der Reburn-Einheit.

**Revendications**

1. Système de brûlage de fumées pour améliorer la qualité environnementale d'un fluide gazeux émanant de la sortie (67, 68) d'une source et contenant des hydrocarbures combustibles, comportant une unité de re-brûlage (41, 42, 123) ayant :

   (1) une ouverture d'entrée (67, 68) couplée à ladite sortie (67, 68), et en communication fluidique avec celle-ci,
   (2) une ouverture de sortie (62, 63) pour la sortie des produits gazeux de combustion à partir de ladite unité de re-brûlage (41, 42, 123),
   (3) des moyens formant brûleur (55, 56) couplés à ladite unité de re-brûlage (41, 42, 123), pour la combustion d'un combustible dans ladite unité de re-brûlage,
   (4) des moyens d'oxygénation (127, 129, 130, 133, 134, 135), couplés à ladite unité de re-brûlage, pour introduire un gaz contenant de l'oxygène dans ladite unité de re-brûlage, et
   (5) des moyens d'étranglement (91, 92), couplés à ladite ouverture de sortie, pour réduire de manière sélective la surface de coupe transversale de ladite ouverture de sortie,

   **caractérisé par** :

   (A) des moyens de détection, couplés à ladite unité de re-brûlage, pour déterminer un état dans ladite unité de re-brûlage, et
   (B) des moyens de commande d'étranglement, couplés auxdits moyens de détection et auxdits moyens d'étranglement pour, en réponse à l'état déterminé par lesdits moyens de détection, commander la quantité de la surface de coupe transversale de ladite ouverture de sortie réduite par lesdits moyens d'étranglement.

2. Système de brûlage de fumées selon la revendication 1, **caractérisé en outre par**

   (A) ladite unité de re-brûlage (41, 42, 123) comportant des premier et second tronçons de re-brûlage séparés (41, 42),
   (B) ladite sortie ayant des premier et deuxième orifices de sortie (67, 68), chacun pour permettre la sortie des produits gazeux de combustion à partir de ladite chambre de combustion principale,
   (C) ladite ouverture d'entrée (67, 68) ayant des premier et second orifices d'entrée, couplés à ladite sortie et en communication de fluide avec celle-ci, lesdits premier et second orifices d'entrée s'ouvrant dans lesdits premier et second tronçons de re-brûlage, respectivement,
   (D) ladite ouverture de sortie incluant des troisième et quatrième orifices de sortie (62, 63) à partir desdits premier et second tronçons de re-brûlage, respectivement,
   (E) lesdits moyens formant brûleur comportant des premier et second tronçons de brûleur (55, 56) couplés auxdits premier et second tronçons de re-brûlage, respectivement, pour la combustion d'un combustible dans lesdits premier et second tronçons de re-brûlage, respectivement, et
   (F) lesdits moyens d'oxygénation comportant des premier et second tronçons d'oxygénation (127, 129, 130, 133, 134, 135), couplés auxdits premier et second tronçons de re-brûlage, respectivement, pour introduire un gaz contenant de l'oxygène dans lesdits premier et second tronçons de re-brûlage, respectivement.

3. Système de combustion comportant un système de brûlage de fumées selon la revendication 1 ou 2, dans lequel le système de combustion comporte une chambre de combustion principale (32) ayant pour caractéristiques :

   (a) une entrée (231) pour l'introduction de déchets collectifs solides, et
   (b) une sortie (67, 68) couplée à ladite première ouverture d'entrée de ladite unité de re-brûlage, pour la sortie des produits gazeux de combustion à partir

4. Procédé de brûlage de fumées émanant de la sortie d'une source, comportant les étapes consistant à :

   (A) faire passer lesdites fumées à partir de ladite sortie directement dans une ouverture d'entrée (67, 68) d'une unité de re-brûlage (41, 42, 123),
   (B) brûler un combustible dans ladite unité de re-brûlage,
   (C) introduire une quantité de gaz contenant de l'oxygène dans ladite unité de re-brûlage,
(D) faire passer les produits de combustion gazeux à l'extérieur de ladite unité de re-brûlage à travers une ouverture de sortie (62, 63), et
(E) réduire de manière sélective la surface de coupe transversale de ladite ouverture de sortie, **caractérisé par** les étapes consistant à :

(A) déterminer un état dans ladite unité de re-brûlage, et
(B) en réponse à l'état déterminé dans ladite unité de re-brûlage, commander la quantité de la surface de coupe transversale de ladite ouverture de sortie réduite par lesdits moyens d'étranglement.

5. Procédé selon la revendication 4, **caractérisé en outre par** les étapes consistant à :

(A) placer des déchets collectifs à travers une première entrée (231) dans une chambre d'incinérateur principale (32),
(B) brûler lesdits déchets collectifs pour produire des produits de combustion gazeux, et
(C) faire passer les produits de combustion gazeux à l'extérieur de ladite chambre de combustion principale à travers ladite sortie (67, 68) et directement dans ladite ouverture d'entrée (67, 68) de ladite unité de re-brûlage.

6. Procédé selon la revendication 5, **caractérisé en outre par** les étapes consistant à :

(A) ladite unité de re-brûlage comportant des premier et second tronçons (41, 42), faire passer les produits de combustion gazeux à l'extérieur de ladite chambre de combustion principale à travers ladite sortie directement dans (a) une deuxième ouverture d'entrée (67) dudit premier tronçon de re-brûlage, et (b) une troisième ouverture d'entrée (68) dudit second tronçon de re-brûlage,
(B) brûler un combustible dans lesdits premier et second tronçons de re-brûlage,
(C) introduire une quantité de gaz contenant de l'oxygène dans lesdits premier et second tronçons de re-brûlage, et
(D) faire passer les produits de combustion gazeux à l'extérieur desdits premier et second tronçons de re-brûlage à travers des première et seconde ouvertures de sortie (62, 63), respectivement.

7. Procédé selon la revendication 4, **caractérisé en outre par** les étapes consistant à :

(A) faire passer les produits de combustion gazeux à l'extérieur de ladite chambre de combustion principale à travers ladite sortie et directement dans (a) une première ouverture d'entrée (67) d'un premier tronçon de re-brûlage (41) de ladite unité de re-brûlage, et (b) une seconde ouverture d'entrée (68) d'un second tronçon de re-brûlage (42) de ladite unité de re-brûlage,
(B) brûler ledit combustible dans lesdits premier et second tronçons de re-brûlage,
(C) introduire une quantité de gaz contenant de l'oxygène dans lesdits premier et second tronçons de re-brûlage, et
(D) faire passer les produits de combustion gazeux à l'extérieur desdits premier et second tronçons de re-brûlage à travers des première et seconde ouvertures de sortie (62, 63) de ladite unité de re-brûlage, respectivement.

Fig. 1

Fig. 2

Fig. 3

**Fig. 4**

**Fig. 5**

**Fig. 6**

**Fig. 7**

72    116    114    72    118    106    86    104    108    110    112    70

**Fig. 8**

122    144    126    127    128    132    130    131    135    142    143    134    133    139    129    124    146    138    145    125

Fig. 9

**Fig. 10**

**Fig. 11**

**Fig. 12**

**Fig. 13**

**Fig. 14**

**Fig. 15**

# Fig. 16

**Fig. 17**

**Fig. 18**

Fig. 20

Fig. 19

Fig. 21

**Fig. 24**

**Fig. 23**

**Fig. 22**